# EUROPÄISCHE PATENTANMELDUNG

(11) **EP 1 489 373 A2**
(43) Veröffentlichungstag der Anmeldung: **22.12.2004**
(21) Anmeldenummer: 04009051.6
(22) Anmeldetag: 16.04.2004
(51) Int. Cl.: F28D 9/00, F28F 27/02, F01N 3/04

(54) **Gehäuseloser Plattenwärmetauscher mit Sammelkasten**

(30) Priorität: 18.06.2003 DE 10327481
(71) Anmelder: Modine Manufacturing Company, Racine, Wisconsin 53403-2552 (US)
(72) Erfinder: Brost, Viktor, Dipl.-Ing., 72631 Aichtal (DE)
(74) Vertreter: Wolter, Klaus-Dietrich

(57) **Zusammenfassung**

Die Erfindung betrifft einen gehäuseloser Plattenwärmetauscher mit wenigstens einem Sammelkasten (1) mit Ein - oder Austrittsöffnungen (2) für ein Fluid, wobei der Sammelkasten (1) mit dem umlaufenden Rand (3) seiner Wand (4) das eine Ende des Plattenstapels (5) umfasst, so dass der Plattenwärmetauscher mit seinem Sammelkasten (1) in einem Verfahrensschritt, beispielsweise in einer Lötoperation, herstellbar ist. Erfindungsgemäß ist vorgesehen, dass die Wand (4) des Sammelkastens (1) wenigstens eine Montageöffnung (6) aufweist, um nach dem Abschluss des Verfahrensschrittes ein Ventil (7) in den Sammelkasten (1) einsetzen und befestigen zu können. Ein erfindungsgemäßes Herstellungsverfahren sieht vor, dass die Platten (11, 12) des Plattenwärmetauschers zu einem Plattenstapel zusammengefügt werden, dass der Plattenstapel durch Aufschieben eines Sammelkastens (1) auf die gegenüberliegenden Enden zusammengehalten und fixiert wird, dass der Plattenwärmetauscher in einem Lötofen komplett gelötet wird und dass schließlich ein Ventil (7) in einen der Sammelkästen (1) eingebracht wird. Die Erfindung führt zu einer vergleichsweise günstigen Herstellbarkeit des Plattenwärmetauschers.

## Beschreibung

Die Erfindung betrifft einen gehäuselosen Plattenwärmetauscher mit wenigstens einem Sammelkasten und mit Ein - oder Austrittsöffnungen für ein Fluid, der mit dem umlaufenden Rand seiner Wand das eine Ende des Plattenstapels umfasst, so dass der Plattenwärmetauscher mit seinem wenigstens einen Sammelkasten in einem Verfahrensschritt, beispielsweise in einer Lötoperation, herstellbar ist. Darüber hinaus betrifft die Erfindung ein Herstellungsverfahren für einen solchen Plattenwärmetauscher.

Ein gehäuseloser Plattenwärmetauscher der beschriebenen Art ist Gegenstand der bisher nicht veröffentlichten deutschen Patentanmeldung DE 102 29 083.0 und der europäischen Patentanmeldung EP 03 007 724.2.

In vielen Fällen ist es erforderlich, in dem Sammelkasten ein Ventil einzusetzen, um den durch den Sammelkasten strömenden Fluidstrom, beispielsweise einen Abgasstrom, regulieren zu können. So etwas stößt bisher auf Schwierigkeiten, der Art, dass die Herstellungskosten für den Plattenwärmetauscher, vor allem durch die nicht unbeachtlichen Montagekosten für das Ventil, in unerwünschte Höhen ansteigen können.

So etwas ist beispielsweise bei dem Abgaswärmetauscher der Fall, der aus DE 101 42 539 A1 bekannt wurde, welcher jedoch kein gehäuseloser Plattenwärmetauscher ist. Dort ist vorgesehen, den Abgaswärmetauscher mittels Schweißverbindungen herzustellen, was ziemlich aufwendig sein dürfte. Schweißverfahren scheinen auch bei dem aus der DE 199 62 863 A1 bekannt gewordenen Abgaswärmetauscher, der ebenfalls kein gehäuseloser Plattenwärmetauscher ist, die bevorzugte Verbindungstechnik zu sein. Im EP 916 837 A2, wurde ein Ventil in einem Gehäuse an einem Ende des Wärmetauschers angeschraubt, was ebenfalls erhebliche Herstellungskosten verursachen dürfte. An dem Gehäuse ist die Abgasleitung lösbar befestigt.

Aus den deutschen Anmeldungen DE 101 42 411 A1 und DE 101 44 293 A1 sind Ventilkomponenten bekannt geworden, die mit ihrer Welle durch zwei Öffnungen eines Mantelrohres geführt sind, durch das ein Abgasstrom leitbar ist, der mittels einer an der Welle befestigten Klappe regulierbar ist. Auch solche Anordnungen scheinen einen enormen Fertigungsaufwand zu verursachen, da zur Herstellung des gesamten Wärmetauschers zahlreiche Montageoperationen durchgeführt werden müssen.

Die Aufgabe der Erfindung besteht darin, den im Oberbegriff beschriebenen gehäuselosen Plattenwärmetauscher, unter Beibehaltung seiner günstigen Herstellbarkeit, mit einem im Sammelkasten integrierten Ventil zu versehen.

Diese Aufgabe wird erfindungsgemäß durch den gehäuselosen Plattenwärmetauscher mit den kennzeichnenden Merkmalen des Anspruchs 1 gelöst und durch ein Herstellungsverfahren, dass die im Anspruch 8 aufgeführten Verfahrensschritte, und zwar in der dort aufgeführten Reihenfolge, aufweist.

Bei dem Plattenwärmetauscher ist vorgesehen, in der Wand des Sammelkastens wenigsten eine Montageöffnung einzubringen. Die Montageöffnung kann bereits bei der Herstellung des Sammelkastens eingebracht werden. Selbstverständlich scheint es nicht ausgeschlossen zu sein, die Montageöffnung nach dem Löten herzustellen, obwohl so etwas in der Regel nicht günstig ist, weil - je nach Art der Einbringung der Öffnung - Rückstände im Plattenwärmetauscher verbleiben können, die mehr oder weniger aufwendig entfernt werden müssen. Nach dem Löten des Plattenwärmetauschers mit dem Sammelkasten kann mit Hilfe der Montageöffnung das Ventil als vormontierte Ventileinheit angebracht werden. Durch das Vorsehen der Montageöffnung ist es möglich geworden, die vergleichsweise sehr günstige Herstellungsweise des Plattenwärmetauschers beizubehalten.

Das Verfahren zur Herstellung eines gehäuselosen Plattenwärmetauschers sieht vor, dass die Platten des Plattenwärmetauschers zu einem Plattenstapel zusammengefügt werden, dass der Plattenstapel durch Aufschieben eines Sammelkastens auf die beiden gegenüberliegenden Enden zusammengehalten und fixiert wird, dass der Plattenwärmetauscher in einem Lötofen komplett gelötet wird, und dass ein Ventil in einen der Sammelkästen eingebracht wird.

Auch wenn entsprechende Verfahrensschritte nicht explizit aufgeführt wurden, ist klar, dass zusätzliche Teile, wie beispielsweise Anschlussstutzen, die ebenfalls mittels Löten befestigt werden können, in den Plattenstapel eingefügt werden und insofern beispielsweise zum ersten Verfahrensschritt gehören. Ferner ist gemäß dem 3. Verfahrensschritt eine komplette Lötung vorgesehen, wozu auch die Anschlussstutzen gehören können.

Durch diese Maßnahmen wird erreicht, dass die Herstellungskosten, auch bei einem gehäuselosen Plattenwärmetauscher, der ein Ventil in einem seiner Sammelkästen aufweist, vergleichsweise äußerst günstig sind.

Weitere Merkmale ergeben sich aus den Patentansprüchen und aus der nachfolgenden Beschreibung.

Die Erfindung wird nachfolgend in einem Ausführungsbeispiel beschrieben.
Fig. 1 Explosionsdarstellung eines Plattenwärmetauschers;

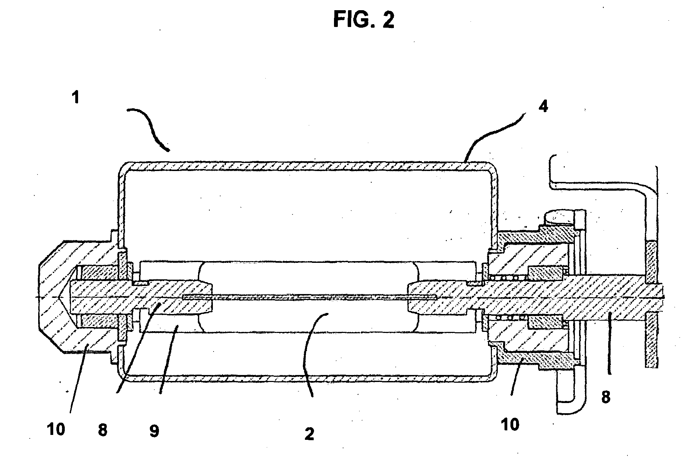

Fig. 2 Schnitt durch den Sammelkasten des Plattenwärmetauschers;
Fig. 3 Draufsicht auf den Plattenwärmetauscher;

Es handelt sich im Ausführungsbeispiel um einen mittels Flüssigkeit gekühlten Abgaswärmetauscher, der Bestandteil einer Abgasrückführeinrichtung eines mittels Verbrennungsmotor betriebenen Kraftfahrzeugs ist.

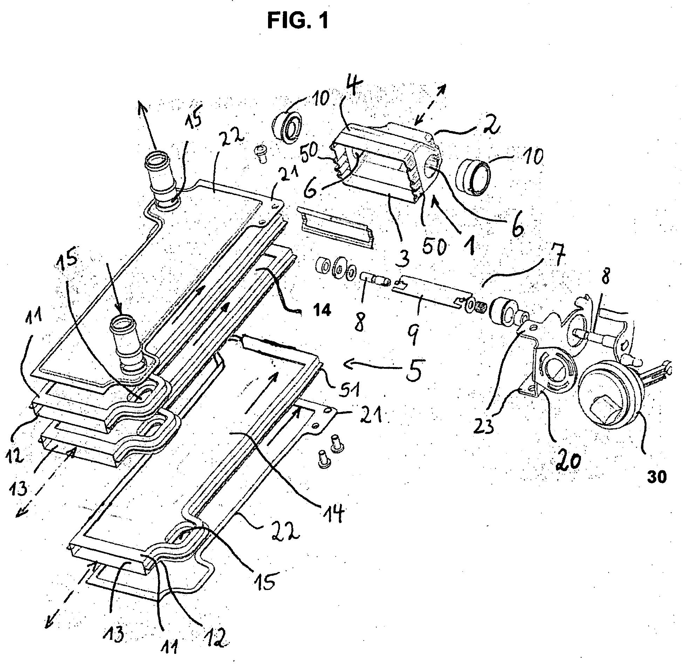

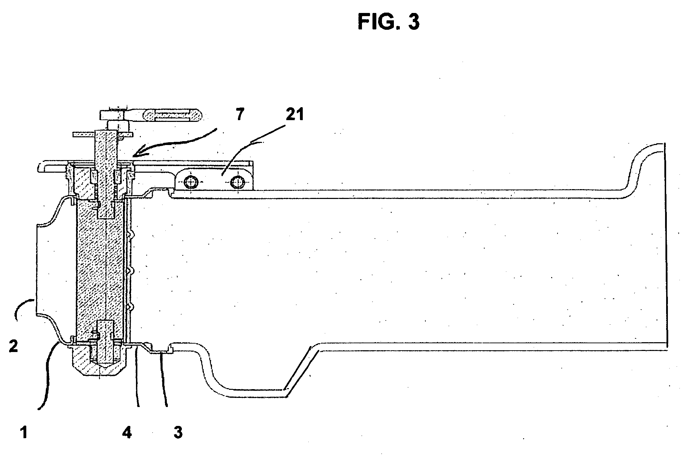

Wie die Fig. 1 zeigt, strömt die Kühlflüssigkeit gemäß den durchgehend gezeichneten Pfeilen durch Öffnungen **15** in den Platten **11, 12** in den Plattenstapel ein und zwischen den Platten **11, 12** hindurch. Die Platten **11, 12** sind entsprechend verformt bzw. profiliert, so dass zwischen zwei durch zwei identische Platten **11, 12** gebildeten Flachrohren **13** für das Abgas ein Strömungskanal **14** für die Kühlflüssigkeit vorhanden ist. Im einzelnen wurde diese Art der Plattenausbildung im EP 992 756 A2 beschrieben. Das Abgas strömt durch die Ein - oder Austrittsöffnung **2** im Sammelkasten **1,** und, wie die gestrichelten Pfeile zeigen, durch die bereits erwähnten Flachrohre **13** für das Abgas hindurch. Die Strömungsrichtung ist vorzugsweise so, dass der gezeigte Sammelkasten **1** derjenige ist, in dem das bereits gekühlte Abgas ankommt. Jedoch ist eine entgegengesetzte Strömungsrichtung nicht ausgeschlossen, was durch die gestrichelten Pfeile angedeutet ist. Wie in der noch nicht veröffentlichten Anmeldung EP 03 007 724:2 bereits beschrieben wurde, werden die Platten **11, 12** zum Plattenstapel zusammengesetzt und an beiden Enden des Plattenstapels wird dann je ein Sammelkasten **1** mit dem umlaufenden Rand **3** seiner Wand **4** über das Ende des Plattenstapels geschoben. Es wurde nur einer der Sammelkästen 1 dargestellt, nämlich derjenige, in dem nach dem Löten ein Ventil **7** eingebaut wird. Beide Sammelkästen **1** sind, von den Montageöffnungen **6** im gezeigten Sammelkasten **1** abgesehen, im übrigen identisch ausgebildet. Sie besitzen vorzugsweise die Form eines Diffusors, weshalb sie eine deutliche Konizität aufweisen, die von der Anschlussseite am Plattenstapel bis hin zur Anschlussseite an der nicht gezeigten Abgasanschlussleitung geht, so dass ein relativ kleiner Querschnitt der Ein - bzw. Ausströmöffnung **2** vorliegt. In der Fig. 3 ist zu sehen, dass durch den über das Ende des Plattenstapels geschobenen Rand **3** der Sammelkästen **1** der Plattenstapel effektiv vorfixiert ist. Der Rand **3** des Sammelkastens **1** ist mit Falten **50** versehen, die dafür gedacht sind, jeweils einen Vorsprung **51** am Umfang des Plattenstapels aufzunehmen, wie das im Einzelnen in der noch nicht veröffentlichten Anmeldung

EP 03 007 724.2 beschrieben ist. Dadurch wird die Klemmwirkung des Sammelkastens **1** auf den Plattenstapel verbessert. Die in der Fig. 1 gezeigten Anschlussstutzen für die Kühlflüssigkeit werden in die Öffnungen **15** der Abdeckplatte **22** eingesetzt, um ebenfalls eingelötet werden zu können.

Die einzelnen Platten und - falls erforderlich - auch die Sammelkästen **1**, besitzen, eine geeignete Lotbeschichtung, so dass ein in solcher Art und Weise vorbereiteter

Plattenwärmetauscher in einer einzigen Lötoperation zu einem kompakten Plattenwärmetauscher verbunden werden kann.

Im Ausführungsbeispiel weist der Sammelkasten **1** zwei Montageöffnungen **6** auf, die in gegenüberliegenden Wandabschnitten **4** des Sammelkastens **1** angeordnet sind.

In nicht gezeigten anderen Ausführungen reicht eine einzige Montageöffnung **6**. Die Frage, wie viele Montageöffnungen **6** notwendig sind, hängt z. B. von der Art des Ventils **7** ab, das eingebaut werden soll, oder auch von der Gestaltung des Sammelkastens 1 selbst. Das gezeigte Ventil **7** besitzt eine Welle **8**, die aus zwei Wellenstücken besteht und eine Klappe **9**, die axial zwischen den Wellenstücken befestigt ist, weshalb bei Verdrehung der Welle **8** die Klappe **9** einen größeren oder kleineren Querschnitt des Sammelkastens **1** freigeben oder versperren kann. Die Welle **8** ist in Wirkverbindung mit einem Stellelement **30**, das z. B. entsprechend der vorliegenden Temperatur die gewünschte Stellung der Klappe **9** einstellen wird. In beiden Montageöffnungen **6** wird eine Lagerbuchse **10** eingesetzt. In den Lagerbuchsen **10** ist die Welle **8** drehbar abgestützt. Gleichzeitig werden die Montageöffnungen **6** durch die Lagerbuchsen **10** nach außen abgedichtet. Das Wellenstück, welches mit dem Stellelement **30** in Wirkverbindung ist, geht durch die zugeordnete Lagerbuchse **10** hindurch und ist darin zweckmäßig abgedichtet. Die andere Lagerbuchse **10** ist topfartig ausgebildet. Wie erkennbar ist, könnte auf diese

Lagerbuchse **10** und auf die zugeordnete zweite Montageöffnung **6** verzichtet werden. Anstelle der zweiten Montageöffnung **10** käme eine eingeprägte oder eingeformte Ausbuchtung der Wand **4** in Betracht, in der das zweite Wellenstück oder das zweite Ende einer durchgehenden Welle **8** drehbar gelagert sein könnte. Beispielsweise könnte aber auch eine einseitige Lagerung der Welle **8** vorgesehen werden, lediglich an dem Wellenstück, das mit dem Stellelement **30** in Wirkverbindung steht. (alles nicht gezeigt)

Sollten Sammelkästen **1** vorgesehen werden, die nicht in der Art eines Diffusors eine konische Wand **4** aufweisen, kann der Einbau des Ventils **7** auch durch die zur Anschlussleitung weisenden Ein - oder Ausströmöffnung **2** im Sammelkasten **1** vorgenommen werden, da dieselbe ohne Konizität einen entsprechend größeren Querschnitt aufweist.

Darüber hinaus ist eine Haltevorrichtung **20** vorhanden, die in geeigneter Weise ausgebildet ist, um daran einzelne Elemente des Ventils **7** und das Stellelement **30** zu einer vormontierten Ventileinheit befestigen zu können. Die gezeigte Haltevorrichtung **20** ist der Höhe des Plattenstapels angepasst, und sie ist ein umformtechnisch hergestelltes Teil aus Blech, das mehrere Ausschnitte für den vorstehend genannten Zweck aufweist. Zur gezeigten Haltevorrichtung **20** gehören zwei abgekantete Lappen **23** mit Bohrungen, die zum Zwecke der Befestigung mit Vorsprüngen **21** an den Abdeckplatten **22** des Plattenwärmetauschers zusammenwirken. Im gezeigten Ausführungsbeispiel wurde die Haltevorrichtung angeschraubt.

## Patentansprüche

1. Gehäuseloser Plattenwärmetauscher mit wenigstens einem Sammelkasten (1) mit Ein - oder Austrittsöffnungen (2) für ein Fluid, wobei der Sammelkasten (1) mit dem umlaufenden Rand (3) seiner Wand (4) das eine Ende des Plattenstapels (5) umfasst, so dass der Plattenwärmetauscher mit seinem Sammelkasten (1) in einem Lötofen in einem Verfahrensschritt herstellbar ist,
**dadurch gekennzeichnet, dass** die Wand (4) des Sammelkastens (1) wenigstens eine Montageöffnung (6) aufweist, um nach dem Abschluss des Verfahrensschrittes ein Ventil (7) in den Sammelkasten (1) einsetzen und befestigen zu können.

2. Gehäuseloser Plattenwärmetauscher nach Anspruch 1, **dadurch gekennzeichnet, dass** das Ventil (7) eine Welle (8) und eine daran befestigte Klappe (9) aufweist.

3. Gehäuseloser Plattenwärmetauscher nach Anspruch 1 und 2, **dadurch gekennzeichnet, dass** zwei Montageöffnungen (6) in gegenüberliegenden Wandabschnitten (4) vorgesehen sind.

4. Gehäuseloser Plattenwärmetauscher nach Anspruch 1, 2 und 3, **dadurch gekennzeichnet, dass** in den Montageöffnungen (6) je eine Lagerbuchse (10) angeordnet ist, in denen jeweils ein Ende der Welle (8) oder eines Wellenstückes gelagert ist.

5. Gehäuseloser Plattenwärmetauscher nach Anspruch 1, 2, 3 und 4, **dadurch gekennzeichnet, dass** der Plattenwärmetauscher Abdeckplatten (22) aufweist.

6. Gehäuseloser Plattenwärmetauscher nach Anspruch 1, 2, 3, 4 und 5, **dadurch gekennzeichnet, dass** eine Haltevorrichtung (20) für eine Ventileinheit (7) vorgesehen ist, die an Vorsprüngen (21) der Abdeckplatten (22) befestigt ist.

7. Gehäuseloser Plattenwärmetauscher nach Anspruch 1, 2, 3, 4, 5 und 6, **dadurch gekennzeichnet, dass** die Montageöffnungen (6) vorzugsweise bereits bei der Herstellung des Sammelkastens (1) vorgesehen sind.

8. Verfahren zur Herstellung eines gehäuse losen Plattenwärmetauschers, mit folgenden Verfahrensschritten und deren Durchführung in der folgenden Reihenfolge;
die Platten (11, 12) des Plattenwärmetauschers werden zu einem Plattenstapel zusammengefügt;
der Plattenstapel wird durch Aufschieben eines Sammelkastens (1) auf die gegenüberliegenden Enden zusammengehalten und fixiert;
der Plattenwärmetauscher wird in einem Lötofen komplett gelötet;
**dadurch gekennzeichnet, dass**
schließlich ein Ventil (7) in einen der Sammelkästen (1) eingebracht wird.

9. Verfahren nach Anspruch 8, **dadurch gekennzeichnet, dass** das Ventil (7) mittels, wenigstens einer Montageöffnung (6) im Sammelkasten (1) eingebaut wird.

10. Verfahren nach Anspruch 8, **dadurch gekennzeichnet, dass** das Ventil (7) durch die im Sammelkasten (1) vorhandene und zur Anschlussleitung weisende Ein - oder Ausströmöffnung (2) eingebracht wird.

11. Verfahren nach einem der Ansprüche 8 - 10, **dadurch gekennzeichnet, dass** das Ventil (7) als vormontierte Ventileinheit eingebaut wird.
